# EUROPEAN PATENT SPECIFICATION

(11) **EP 3 267 126 B1**
(45) Date of publication and mention of the grant of the patent: **24.03.2021**
(21) Application number: 17176187.7
(22) Date of filing: 15.06.2017
(51) Int. Cl.: F24S 25/00

(54) **ATTACHMENT METHOD**
BEFESTIGUNGSVERFAHREN
PROCÉDÉ DE FIXATION

(30) Priority: 06.07.2016 DK 201600403
(43) Date of publication of application: 10.01.2018
(73) Proprietor: Nordic Sun ApS, 8370 Hadsten (DK)
(72) Inventor: Slavensky, Kim, 8250 Egå (DK); Vestergaard, Preben, 8740 Brædstrup (DK)
(74) Representative: Rottenberg, Annabell Simone

(56) References cited:
- EP-A1- 2 086 019
- EP-A1- 2 284 454
- WO-A1-96/00827
- WO-A2-98/59122
- US-A1- 2008 314 434
- US-A1- 2010 252 092

## Description

### Field of invention

The present invention relates to a method for attaching rigid solar photovoltaic panels to a surface with roofing felt.

### Prior art

Solar photovoltaic panels comprise photovoltaic cells capable of converting energy of light directly into electricity by the photovoltaic effect. Due to the increasing energy prices and awareness of the environment, solar photovoltaic panels are increasingly being used as alternative energy sources.

Solar photovoltaic panels typically comprise a number of solar cells covered by a glass layer. The solar cells are arranged in a rigid frame typically made in aluminium or a fibre reinforced composite material. The present invention concerns these "rigid type" solar photovoltaic panels. Due to the rigid nature of the frame and the glass layer, the "rigid type" solar photovoltaic panels have to be handled differently than flexible solar photovoltaic panels when it comes to their attachment to roofing felt.

The solar photovoltaic panels that comprise glass, which is rather brittle, need to be mounted to the underlying surface by means of rigid mounting members (typically elongated mounting rails).

When it comes to attachment of solar photovoltaic panels on roofing felt, the prior art teaches to attach the solar photovoltaic panels on mounting members. The mounting members may be attached to solar mounts that are incorporated into the surface (e.g. a new roof). E.g. from EP 2 086 019 profiles for attaching photovoltaic modules to a roof and a method and system for attaching photovoltaic modules to a roof structure are known. The profiles are in the form of rails which are fastened to the roofing structure, wherein the rails are distributed evenly beneath the photovoltaic module so as to support the photovoltaic module.

If the solar mounts are not incorporated into the surface, the mounting members may be fixed to the surface by penetrating the roofing felt and screwing solar panel mounts into the surface. Penetration of the roofing felt introduces a risk of water penetration into the surface under the roofing felt. Therefore, each hole needs to be sealed, which is time consuming and increases the cost of the installation procedure. Moreover, water penetration into the surface under the roofing felt could potentially reduce the lifetime of the roofing felt significantly.

Furthermore, it is recommended that the "rigid type" solar photovoltaic panels are arranged in a distance from the roofing felt in order to allow for ventilation of the back side of the solar photovoltaic panels. The reason for this recommendation is that the efficiency of a solar photovoltaic panel decreases with increasing temperature.

In some applications, adhesive tape is used to attach "rigid type" solar photovoltaic panels to a surface. As it will be explained in the detailed description with reference to the accompanying drawings, adhesive tape is associated with a number of drawbacks. Adhesive tape is not suitable for providing a firm attachment of "rigid type" solar photovoltaic panels to roofing felt.

From WO 2013/174164 A1, methods of installing a rooftop solar systems are known. The method comprises i.a. affixing an array of base having a plurality of fastening members of base elements to fasten the module support to the base elements on the roofing surface, and attaching a flexible solar module onto the top surface of the module support. The affixing of the array of base elements may be performed using an adhesive. However, the method is not suited when the rooftop is made of roofing felt since, in this case, special measures must be taken to assure that the the roofing felt is restricted from getting into physical contact with the solar panel during displacement of the roofing felt.

From US2010/252092 A1 a roofing felt mounted solar panel is known, wherein the flexible support members are provided between the roofing felt and the solar panel at the areas, where the roofing felt is not fixed to the underlying structure and thus is movable, however, the solar panels are fixed to the underlying structure, and are not movable with the roofing felt.

When the roofing felt is attached to an underlying structure in attachment areas by means of attachment structures in a manner in which portions of the roofing felt provided between adjacent attachment areas are arranged to be vertically displaced relative to the underlying structure there is a risk that the roofing felt is brought into physical contact with the back side of the solar photovoltaic panel(s) as the roofing felt is vertically displaced due to wind suction.

Thus, there is a need for a method which enables a fast and easy attachment of solar photovoltaic panels on roofing felt and which reduces or even eliminates the above mentioned disadvantages of the prior art.

### Summary of the invention

The object of the present invention can be achieved by a method as defined in claim 1. Preferred embodiments are defined in the dependent sub claims and explained in the following description and illustrated in the accompanying drawings.

The method for attaching a rigid solar photovoltaic panel having a front side and a back side to roofing felt attached to an underlying structure, wherein the solar photovoltaic panel is attached to one or more mounting members attached to the roofing felt, wherein the roofing felt is attached to an underlying structure in attachment areas by means of attachment structures indicated by attachment lines in a manner in which portions of the roofing felt provided between adjacent attachment areas are arranged to be vertically displaced relative to the underlying structure,
wherein the method comprises the step of:
- adding adhesive to the mounting members or to the roofing felt;
- gluing the mounting members to the roofing felt, wherein the mounting members are arranged in such a manner that the roofing felt is restricted from getting into physical contact with the solar photovoltaic panel(s) when the roofing felt is vertically displaced due to wind suction, and where the solar panels are vertically displaceable relative to the underlying structure, as roofing felt is being moved with respect to an attachment line, and wherein a first mounting member and a second mounting member are arranged between two adjacent attachment structures, and wherein the first mounting member and the second mounting member are arranged essentially symmetrically with respect to a midline between two adjacent attachment lines.

Hereby, it is possible to prevent that the roofing felt is damaging solar photovoltaic panel(s) by restricting the roofing felt from being brought into physical contact with the back side of the solar photovoltaic panel(s) as the roofing felt is vertically displaced due to wind suction.

The method makes it possible for solar photovoltaic panels to be attached to roofing felt in a quick and easy way. The solar photovoltaic panels will furthermore be arranged in a distance from the roofing felt so that ventilation of the back side of the solar photovoltaic panels can be achieved. Hereby a high efficiency of a solar photovoltaic panel can be maintained.

The roofing felt may be attached directly or indirectly to an underlying structure (e.g. a base surface). The roofing felt may be mechanically connected to the underlying structure (base surface), however, it is possible that an insulation layer (e.g. of mineral wool) is provided between the roofing felt and the underlying structure (base surface). The mounting members are attached directly to the roofing felt.

The roofing felt may be attached to the underlying structure (base surface) by means of long attachment screws configured to be screwed into the underlying structure (base surface). Such attachment screws may be used to attach roofing felt to the underlying structure (base surface) when an insulation layer (e.g. of mineral wool) is provided between the roofing felt and the base surface (underlying structure).

The underlying structure may be a hard surface such as a plywood panel or concrete. A solar photovoltaic panel may be attached to a roofing felt and thus indirectly attached to an underlying structure arranged under an insulation layer (e.g. mineral wool) that is sandwiched between the roofing felt and the underlying structure.

By the term "roofing felt", which is commonly called "tar paper" is meant a waterproof fibre containing a product impregnated with an asphaltic tar compound. Roofing felt is used for several applications such as underlayment under shingles, permanent roofing materials and for temporary roofing.

Roofing felt comprises bituminous membranes made up of bitumen mixed with a filler component such as sand or limestone. In order to enhance the rigidity and the tear resistance, polymers such as APP (atactic polypropylene) which is a plastic additive are added to the bitumen. Alternatively, a rubber additive SBS (styrene butadiene styrene) is added to the bitumen in order to give elastic benefits.

The roofing felt comprises a central layer that may comprise any of the following ingredients: polyester, fibre glass, rag fibre (hessian), and paper saturated with tar like bitumen substance. Roofing felt is normally provided in roll format.

For some applications, small granules are added to the top of the felt in order to protect against ultraviolet radiation and in order to decrease the product's fire vulnerability. Up to 20% of the granules are not firmly attached to the roofing felt. Therefore, there exists a prejudice against gluing a member directly to a granulated top layer since gluing is normally considered to require a clean surface without loose granulates.

By the term attachment areas is meant the areas of the roofing felt that are attached to the underlying structure. When the roofing felt covers an insulation layer arranged on the top of an underlying structure, the roofing felt may be attached to the underlying structure by means of attachment screws. The areas in which attachment screws are attached to the roofing felt corresponds to the attachment areas.

The mounting members may be any suitable members adapted to be attached to the roofing felt and to receive he solar photovoltaic panel(s) e.g. by means of mechanical structures.

Adding adhesive to the mounting members may be done by using a caulking gun.

Gluing the mounting members to the roofing felt may be done by pressing the mounting member towards the roofing felt in order to distribute the adhesive along the mounting member and letting the adhesive harden. The thickness of the adhesive may vary along the length of the mounting member. The thickness of the adhesive preferably corresponds to the distance between the distal surface of the mounting member and the roofing felt. Accordingly, if the distance between the distal surface of the mounting member and the roofing felt is constant, the adhesive may preferably be basically uniformly distributed along the length of the mounting member.

Arranging the mounting members in such a manner that they are capable of transferring load from the solar photovoltaic panel to the roofing felt can be done by ensuring that there is sufficient (preferably full) contact between the mounting member and the roofing felt.

It may be an advantage that adhesive is added to at least one surface of the mounting members.

It is preferred that adhesive is added to a surface of the mounting members that is configured to be attached to the roofing felt.

By the term "rigid solar photovoltaic panel" is meant a solar photovoltaic panel that comprises several rigid elements e.g. glass or a rigid (e.g. metal) frame. Since "rigid solar photovoltaic panel" is not configured to resist bending, a rigid mounting member (e.g. an elongated mounting rail) arranged between the solar photovoltaic panel and the roofing felt is required.

It may be an advantage that the solar photovoltaic panel is attached to the mounting member by mechanical means when the mounting member has been attached to the roofing felt.

It may be an advantage that the solar photovoltaic panel is attached to the roofing felt in such a manner that a space/gap is provided between the back side of the solar photovoltaic panel and the roofing felt, wherein the space/gap maintains a non-zero value even in the case of wind suction.

Hereby, the space/gap between the back side of the solar photovoltaic panel and the roofing felt secures that the roofing felt is not brought into contact with the back side of the solar photovoltaic panel. Accordingly, the space/gap between the back side of the solar photovoltaic panel and the roofing felt prevents the solar photovoltaic panel from being damaged.

Furthermore, when the solar photovoltaic panel is attached to the roofing felt in such a manner that a space/gap is provided between the back side of the solar photovoltaic panel and the roofing felt, the back side of the solar photovoltaic panel can be ventilated so that the temperature of the solar photovoltaic panel can be reduced in order to maintain a high efficiency.

Preferably, the non-zero value is a predefined non-zero value. The non-zero value may be 0.1-8cm, such as 0.2-5cm, e.g. 0.3-0.5cm, 0.6-0.8cm, 0.9-1.1cm, 1.2-1.4cm, 1.5-1.7cm, 1.6-1.8cm, 1.9-2.1cm, 2.2-2.4cm, 2.5-2.7cm, 2.8-3.0cm, 3.1-3.3cm, 3.4-3.6cm, 3.7-3.8cm, 3.9-4.0cm, 4.1-4.3cm, 4.4-4.6cm, 4.7-7.8cm or 4.9-5.0cm.

Hereby it is achieved that the area between the first mounting member and the second mounting member is separated into three sections. Moreover, it is furthermore possible to control that a space/gap of a sufficient predefined value is provided between the back side of the solar photovoltaic panel and the roofing felt. By varying the distance between the first mounting member and a second mounting member, it is possible to control the size of the space/gap between the back side of the solar photovoltaic panel and the roofing felt. Accordingly, by varying the distance between the first mounting member and a second mounting member, a space/gap of sufficient predefined value can be provided between the back side of the solar photovoltaic panel and the roofing felt.

It may be an advantage that one mounting member is arranged between each pair of adjacent attachment structures.

In the invention the first mounting member and the second mounting member are arranged essentially symmetrically with respect to the midline between two adjacent attachment lines.

Hereby, the control of the gap between the back side of the solar photovoltaic panel and the roofing felt is eased.

It may be an advantage that the first mounting member and the second mounting member are arranged essentially symmetrically with respect to an attachment line.

Hereby, it is possible to achieve a symmetric movement pattern of the portions of the roofing felt provided between adjacent attachment areas. As the solar panels are being vertically displaced relative to the underlying structure, the roofing felt is being symmetrically moved with respect to an attachment line.

Tests have revealed that it may be advantageous that the distance between an attachment line and the adjacent mounting member is smaller than the distance between the mounting member and the adjacent mounting member.

By the term "distance between an attachment line and the adjacent mounting member" is meant, the shortest distance between the central portion of the mounting member and the attachment line. The central portion of the mounting member corresponds to the portion positioned at or close to the longitudinal axis of the mounting member.

It may be beneficial that the distance between a first mounting member and a second adjacent mounting member provided at each sides of a midline essentially corresponds to the distance between the mounting member and the adjacent attachment line.

Hereby, it is easy to arrange the mounting member once the attachment line and thus the midlines are known.

It may be advantageous that the space/gap is larger than a fifth of the height of the adjacent mounting members.

Tests have revealed, that when the space/gap is larger than a fifth of the height of the adjacent mounting members, the roofing felt is restricted from getting into physical contact with the solar photovoltaic panel(s) when the solar photovoltaic panel(s) are vertically displaced due to wind suction and the roofing felt is deflected due to displacement of the solar photovoltaic panel(s). Hereby, the solar photovoltaic panel(s) can be protected against impact from the roofing felt in an easy manner.

It may be an advantage that the space/gap is larger than 5% of the distance between the adjacent mounting members provided at each side of a midline.

Physical experiments have shown, that when the space/gap is larger than 5% of the distance between the adjacent mounting members provided at each side of a midline, the roofing felt is restricted from getting into physical contact with the solar photovoltaic panel(s) when the solar photovoltaic panel(s) are vertically displaced due to wind suction and the roofing felt is deflected due to displacement of the solar photovoltaic panel(s). Hereby, the solar photovoltaic panel(s) can be protected against impact from the roofing felt in an easy manner.

It may be beneficial that the mounting members are attached to the roofing felt when the roofing felt is in an unrolled and stretched configuration.

Hereby, it is secured, that the following elongation of the roofing felt is minimised. Accordingly, the solar photovoltaic panel(s) can be protected against impact from the roofing felt.

The method according to the invention provides an easy way of attaching "rigid type" solar photovoltaic panels to roofing felt. The solar photovoltaic panels will furthermore be arranged in a distance from the roofing felt so that ventilation of the back side of the solar photovoltaic panels can be achieved. Hereby a high efficiency of a solar photovoltaic panel can be maintained.

It may be an advantage that the roofing felt is attached to the underlying structure (base surface) by means of long attachment screws configured to be screwed into the base surface. Such attachment screws may be used to attach roofing felt to the base surface when an insulation layer (e.g. of mineral wool) is provided between the roofing felt and the base surface.

It may be an advantage that the area A₁ of the mounting member to which adhesive is added is significantly smaller than the area A₂ of the back side of the solar photovoltaic panel.

Hereby it is possible to only use a required quantum of adhesive. Moreover, a faster mounting procedure can be achieved.

It is preferred that A_{1/}A₂ < 20%, preferably A_{1/}A₂ < 15%. It is even more preferred that A₁/A₂ < 10%. Tests have shown that A₁/A₂ < 10% may be sufficient to provide a reliable attachment of the mounting members to the roofing felt.

It is preferred that adhesive is added to basically the entire area of that surface of the mounting members that is configured to be attached to the roofing felt, and that the surface of the mounting members, that is configured to be attached to the roofing felt, has a shape that corresponds to the shape of the roofing felt while being attached to base surface.

Hereby a good and reliable attachment of the mounting members to the roofing felt can be achieved.

It is preferred that the method includes the step of providing a sufficient number of mounting members to the roofing felt in order to ensure that the load transferred from the solar photovoltaic panel to the roofing felt does not cause damage (tearing) of the roofing felt during working conditions (the expected load).

It is an advantage that the thickness of the adhesive, when the mounting member is attached to the roofing felt, corresponds to the distance between the mounting member and the underlying roofing felt, so that good attachment between mounting member and the underlying roofing felt is achieved.

Hereby, optimum contact between the mounting member and the underlying roofing felt is achieved. Accordingly, a firm and good attachment is achieved.

It is preferred that the thickness of the adhesive, when the mounting member is attached to the roofing felt, varies and is larger than the thickness of one layer of roofing felt at some portions.

Hereby is achieved that full contact between the mounting member and the roofing felt can be obtained.

It is preferred that the thickness of the adhesive when the mounting member is attached to the roofing felt varies and is larger than two times the thickness of one layer of roofing felt at some portions.

Hereby it is possible to have full contact between the mounting member and the roofing felt even when several layers of roofing felt is arranged on top of each other (e.g. in overlapping zones).

It may be an advantage that the thickness of the adhesive, when the mounting member is attached to the roofing felt, varies and is larger than three times the thickness of one layer of roofing felt at some portions.

Hereby full contact can be achieved between the mounting member and the roofing felt even when three several layers of roofing felt is arranged on top of each other (e.g. in corner zones).

It may be beneficial that the thickness of the adhesive is within the range 1-30 mm, preferably, within the range 2-20 mm, even more preferred within the range 3-10 mm.

It may be beneficial that the adhesive comprises a hardener making the adhesive capable of hardening within one working procedure. The duration of one working procedure is preferably within 60 minutes, preferably within 40 minutes, preferably within 20 minutes. Hereby, solar photovoltaic panels can be mounted fast and in a manner in which they are capable of being subject to loads (e.g. wind loads) and still being attached to the roofing felt.

The adhesive may be a silicone based adhesive, e.g. a two-component fast curing adhesive that is available at the (Danish) dealer Dana Lim or Loctite.

The hardening time may depend on the temperature, however, it is preferred that the adhesive comprises a hardener making the adhesive capable of hardening within 60 minutes, preferably within 40 minutes, preferably within 20 minutes when the temperature is not less than about -15°C.

It is preferred that the mounting members are glued directly on a granulate containing top layer of a roofing felt. The granulate may be slate granulate.

Hereby a good and quick alternative to the time consuming prior art mounting method (where mounting members are screwed into the surface) is achieved. Moreover, it is a huge advantage that there are no penetrations in the roofing felt.

It may be an advantage that the adhesive has a viscosity index that is so high that the adhesive is maintained on the surface to which it is added when the mounting member is turned upside down.

Hereby the work with the adhesive is eased. A more accurate positioning of the mounting members may be achieved.

The objects of the present invention may be achieved by a rigid solar photovoltaic panel having a front side and a back side, which solar photovoltaic panel is configured to be attached to roofing felt being attached to a base surface by attaching the solar photovoltaic panel to one or more mounting members configured to transfer load from the solar photovoltaic panel to the base surface. The mounting members are integrated to the solar photovoltaic panel.

Hereby a quick mounting of rigid solar photovoltaic panels to roofing felt may be achieved. Since the mounting members are integrated to the solar photovoltaic panel, the only operation required is to add adhesive to the distal surface of the mounting members and position the mounting members on the roofing felt.

It may be an advantage that the mounting members are integrated into the back side of the solar photovoltaic panel.

Hereby, the solar photovoltaic panel can easily be attached to the roofing felt by use of adhesive.

It is preferred that the solar photovoltaic panel is configured to be attached to roofing felt by gluing the mounting members directly to the roofing felt.

Again, the term "rigid solar photovoltaic panel" means a solar photovoltaic panel that comprises several rigid elements e.g. glass or a rigid (e.g. metal) frame.

It is preferred that the mounting members protrude through the back side.

Hereby, the solar photovoltaic panel can be attached to the roofing felt in such a manner that a space is provided between the back side of the solar photovoltaic panel and the roofing felt.

Hereby, the back side of the solar photovoltaic panel can be ventilated, so that the temperature of the solar photovoltaic panel can be reduced, in order to maintain a high efficiency.

In a preferred embodiment of the invention, the solar photovoltaic panel comprises two, three or four or more box-shaped mounting members arranged at the corners and/or edges of the solar photovoltaic panel.

The solar photovoltaic panel may comprise two, three or four or more mounting members having other geometries and being arranged at the corners and/or edges of the solar photovoltaic panel. The mounting members may be cylindrical with one plane surface for support (attachment of a solar photovoltaic panel) and a parallel plane surface configured to be glued to the roofing felt.

It is preferred that the surfaces of the mounting members correspond to the surfaces of the roofing felt onto which the mounting members are configured to be attached.

It is possible to have mounting members with plane surfaces or with arced surfaces (e.g. circular arced surfaces). The mounting members may be glued to roofing felt attached to roofing with any geometric shape and roof pitch.

The materials of the frame may be metal such as aluminium, a fibre reinforced compost material or any other suitable material.

The mounting members may be attached to the solar photovoltaic panel by gluing or by any suitable mechanical attachment method (e.g. by use of fastening means such as a screw).

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic cross-sectional view of a roof with roofing felt and a number of mounting rails attached thereto;
- Fig. 2A: shows a schematic cross-sectional view of a roof with roofing felt and solar panels attached to mounting rails attached to the roofing felt;
- Fig. 2B: shows a schematic cross-sectional view of the roof shown in Fig. 2A in a configuration, in which the solar panels and thus the roofing felt is being vertically displaced relative to the underlying structure;
- Fig. 2C: shows a schematic cross-sectional view of the roof shown in Fig. 2A in a configuration, in which the solar panels and thus the roofing felt is being moderately vertically displaced relative to the underlying structure;
- Fig. 2D: shows a schematic cross-sectional view of the roof shown in Fig. 2A in a configuration, in which the solar panels and thus the roofing felt is being slightly vertically displaced relative to the underlying structure;
- Fig. 3A: shows a schematic cross-sectional view of a roof with roofing felt and two solar panels attached to mounting rails attached to the roofing felt;
- Fig. 3B: shows a schematic cross-sectional close-up view of the roof shown in Fig. 3A;
- Fig. 4A: shows a schematic cross-sectional view of a roof with roofing felt and a solar panel attached to mounting rails attached to the roofing felt;
- Fig. 4B: shows a schematic cross-sectional view of the roof shown in Fig. 4A in a configuration, in which the solar panel and thus the roofing felt is being vertically displaced relative to the underlying structure;
- Fig. 4C: shows a schematic cross-sectional view of the roof shown in Fig. 4A in a configuration, in which the solar panel and thus the roofing felt is being moderately vertically displaced relative to the underlying structure;
- Fig. 4D: shows a schematic cross-sectional view of the roof shown in Fig. 4A in a configuration, in which the solar panel and thus the roofing felt is being slightly vertically displaced relative to the underlying structure;
- Fig. 4E: shows a schematic cross-sectional view of the roof shown in Fig. 4A in a configuration, in which the solar panel and thus the roofing felt has not been vertically displaced relative to the underlying structure.
- Fig. 5A: shows a schematic close-up view of a mounting rail provided with glue;
- Fig. 5B: shows a schematic close-up view of the mounting rail shown in Fig. 5A provided with glue;
- Fig. 6A: shows a schematic close-up view of a mounting rail shown in Fig. 5B being attached to a roofing felt;
- Fig. 6B: shows a schematic close-up view of the mounting rail shown in Fig. 5A being glued to the roofing felt;
- Fig. 7: shows a solar photovoltaic panel attached to a roof with roofing felt;
- Fig. 8: shows a perspective top view of a three solar photovoltaic panels attached to a roof with roofing felt by a method according to the invention;
- Fig. 9: shows a perspective bottom view of the three solar photovoltaic panels shown in Fig. 4;
- Fig. 10A: shows a perspective top view of a mounting rail shown in Fig. 8-9;
- Fig. 10B: shows a perspective bottom view of the mounting rail shown in Fig. 10A;
- Fig. 10C: shows a perspective top view of the mounting rail shown in Fig. 10A glued to roofing felt;
- Fig. 11A: shows a perspective bottom view of a solar photovoltaic panel with integrated mounting plates;
- Fig. 11B: shows a perspective bottom view of the solar photovoltaic panel shown in Fig. 11A, wherein glue is provided in one of the mounting plates;
- Fig. 11C: shows a perspective bottom view of the solar photovoltaic panel shown in Fig. 11A attached to roofing felt;
- Fig. 12A: shows a first perspective view of mounting rails glued directly on roofing felt;
- Fig. 12B: shows another perspective view of mounting rails shown in Fig. 12A;
- Fig. 13A: shows a close-up view of roofing felt to which there is added an adhesive tape;
- Fig. 13B: shows a close-up view of roofing felt to which there is added adhesive;
- Fig. 14A: shows a close-up view of an area where a first length roofing layer overlaps a second length roofing felt, wherein glue is used to attach a mounting member to the roofing felt and
- Fig. 14B: shows another close-up view of an area where a first length roofing layer overlaps a second length roofing felt, wherein adhesive tape is used to attach a mounting member to the roofing felt.

### Detailed description of the invention

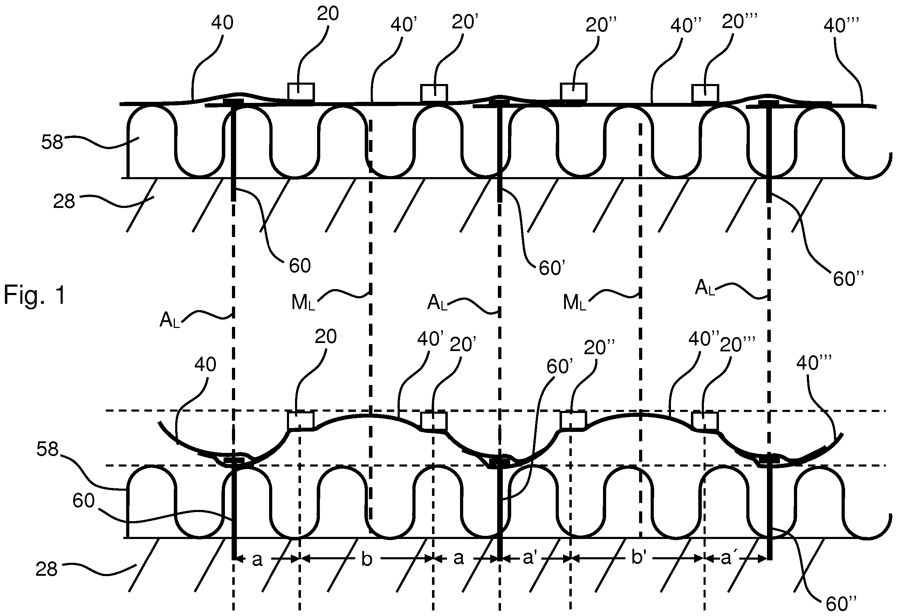

Referring now in detail to the drawings for the purpose of illustrating preferred embodiments of the present invention, the method of the present invention is illustrated in Fig. 1.

Fig. 1 illustrates a schematic cross-sectional view of a roof with roofing felt 40, 40', 40", 40''' and a number of mounting rails 20, 20', 20", 20''' attached thereto. The roofing felt 40, 40', 40", 40", 40''' is attached to an underlying structure 28 by means of attachment screws 60, 60', 60". An insulation layer 58 is provided between the roofing felt 40, 40', 40", 40", 40''' and the underlying structure 28. The mounting rails 20, 20', 20", 20", 20''' are configured to receive one or more solar panels (not shown).

In the top portion of Fig. 1, the roof is shown in a "non-windy situation", whereas the bottom portion of Fig. 1 illustrates a schematic view of the roof under windy conditions, in which the mounting rails 20, 20', 20", 20", 20''' are vertically displaced relative to the underlying structure 28.

It can be seen that the attachment screws 60 are provided in attachment areas 62. A vertical attachment line A_{L} is indicated above each attachment screw 60, 60', 60". A midline M_{L} is indicated between each adjacent pair of attachment lines A_{L}. It can be seen that the larges deflection occurs at the midlines M_{L}.

The mounting rails 20, 20', 20", 20''' are glued to the roofing felt 40, 40', 40" in a symmetric manner with respect to the attachment screws 60. The mounting rails 20, 20', 20", 20''' are also provided symmetrically with respect to the midlines M_{L} and with respect to the attachment lines A_{L}.

Accordingly, the distance a between the mounting rail 20' and the adjacent attachment screw 60' corresponds to the distance a' between the mounting rail 20" and the adjacent attachment screw 60'. The distance b between the mounting rails 20, 20' corresponds to the distance b' between the mounting rails 20", 20'''. Furthermore, the distance b between the mounting rails 20, 20' and the distance b' between the mounting rails 20", 20''' corresponds to the sum of the distances a between the mounting rail 20' and the adjacent attachment screw 60' and the distance a' between the mounting rail 20" and the adjacent attachment screw 60'.

It can also be seen that the first mounting member 20 and the second mounting member 20' are arranged between two adjacent attachment structures 60, 60'.

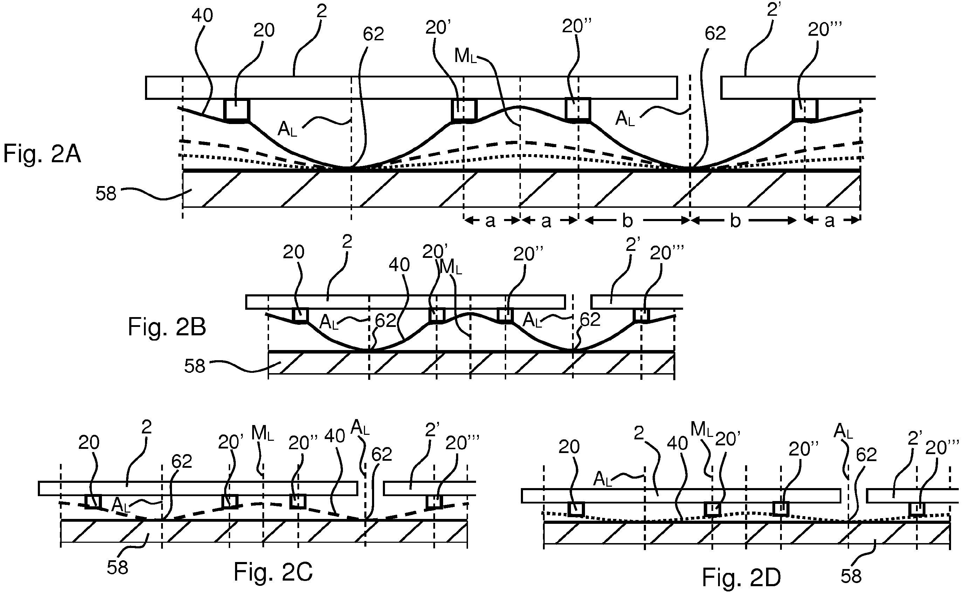

Fig. 2A illustrates a schematic cross-sectional view of a roof with roofing felt 40 and solar panels 2, 2' attached to mounting rails 20, 20', 20", 20''' attached to the roofing felt 40.

A first solar panel 2 is attached to a first group of mounting rails 20, 20', 20", whereas a second solar panel 2' is attached to another group of mounting rails 20''' (only one is shown). The roofing felt 40 is attached to a structure 58 or a layer provided below the structure 58 at attachment areas 62. Attachment lines A_{L} are indicated to mark these attachment areas 62. The attachment of the roofing felt 40 may be carried out by means of attachment screws as shown in Fig. 1.

The midline M_{L} is indicated between the attachment lines A_{L}. It can be seen that the largest deflection occurs at the midlines M_{L}. The solid line indicates the roofing felt 40 under extreme windy conditions. The stippled line indicates the roofing felt 40 under moderate windy conditions, whereas the dotted line indicates the roofing felt 40 under slightly windy conditions.

It can be seen that the solar photovoltaic panel 2 is attached to the roofing felt 40 in such a manner that a space/gap is provided between the back side of the solar photovoltaic panel and the roofing felt. Furthermore, it can be seen that the space/gap maintains non-zero values even in the case of wind suction (the solid line).

It can be seen that the second mounting member 20' and the third mounting member 20" are arranged essentially symmetrically with respect to the midline ML between two adjacent attachment lines A_{L}.

Furthermore, it can be seen that the first mounting member 20 and the second mounting member 20' are arranged essentially symmetrically with respect to an attachment line A_{L}.

Fig. 2B illustrates a schematic cross-sectional view of the roof shown in Fig. 2A in a configuration, in which the solar panels 2, 2' and thus the roofing felt 40 is being vertically displaced relative to the underlying structure.

Fig. 2C illustrates a schematic cross-sectional view of the roof shown in Fig. 2A in a configuration in which the solar panels 2 and thus the roofing felt 40 is being moderately vertically displaced relative to the underlying structure.

Fig. 2D illustrates a schematic cross-sectional view of the roof shown in Fig. 2A in a configuration in which the solar panels 2 and thus the roofing felt 40 is being slightly vertically displaced relative to the underlying structure.

In Fig. 2A, Fig. 2B, Fig. 2C and in Fig. 2D it can be seen that the mounting rails 20, 20', 20", 20''' attached to the roofing felt 40 in a manner in which the solar panels 2, 2' are restricted from getting into physical contact with the roofing felt 40 even when the solar panels 2, 2' are vertically displaced due to wind suction and the roofing felt 40 is deflected due to displacement of the solar panels 2, 2'.

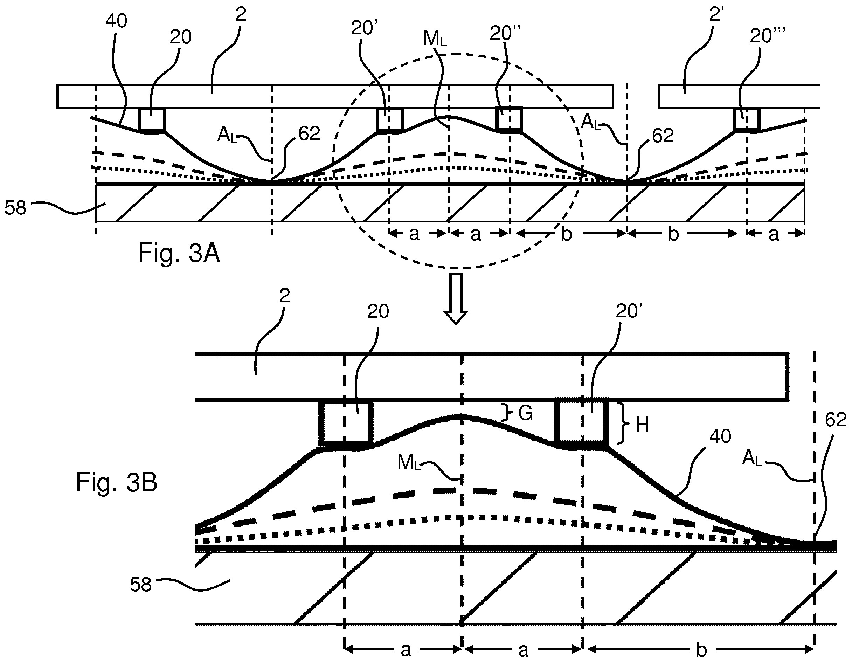

Fig. 3A illustrates a schematic cross-sectional view of a roof with roofing felt 40 and two solar panels 2, 2' attached to mounting rails 20, 20', 20", 20''' attached to the roofing felt 40. A first solar panel 2 is attached to a first group of mounting rails 20, 20', 20", whereas a second solar panel 2' is attached to another group of mounting rails 2''' of which only one is visible. The roofing felt 40 is attached to a structure 58 or a layer provided below the structure 58 at attachment areas 62. Attachment lines A_{L} are indicated to mark these attachment areas 62. The attachment of the roofing felt 40 may be carried out by means of attachment screws as shown in Fig. 1.

The midline M_{L} is indicated between the attachment lines A_{L}. It can be seen that the larges deflection occurs at the midlines M_{L}. The solid line indicates the roofing felt 40 under extreme windy conditions. The stippled line indicates the roofing felt 40 under moderate windy conditions, whereas the dotted line indicates the roofing felt 40 under slightly windy conditions.

It can be seen that the solar photovoltaic panel 2 is attached to the roofing felt 40 in such a manner that a space/gap is provided between the back side of the solar photovoltaic panel and the roofing felt. Furthermore, it can be seen that the space/gap maintains non-zero values even in the case of wind suction (the solid line).

It can be seen that the second mounting member 20' and the third mounting member 20" are arranged essentially symmetrically with respect to the midline M_{L} between two adjacent attachment lines A_{L}, that the first mounting member 20 and the second mounting member 20' are arranged essentially symmetrically with respect to an attachment line A_{L}. The distances a, b are indicated in Fig. 3A.

Fig. 3B illustrates a schematic cross-sectional close-up view of the roof shown in Fig. 3A.

It can be seen that solar panel 2 is attached to the roofing felt 40 in such a manner that a gap G is provided between the back side of the solar panel and the roofing felt 40.

Furthermore, it can be seen that the gap G between the back side of the solar panel 2 and the roofing felt 40 is larger than a fifth of the height H of the adjacent mounting members 20, 20'.

Moreover, it can be seen that the gap G is larger than 5% of the distance 2a between the adjacent mounting members 20, 20' provided at each side of a the midline M_{L}.

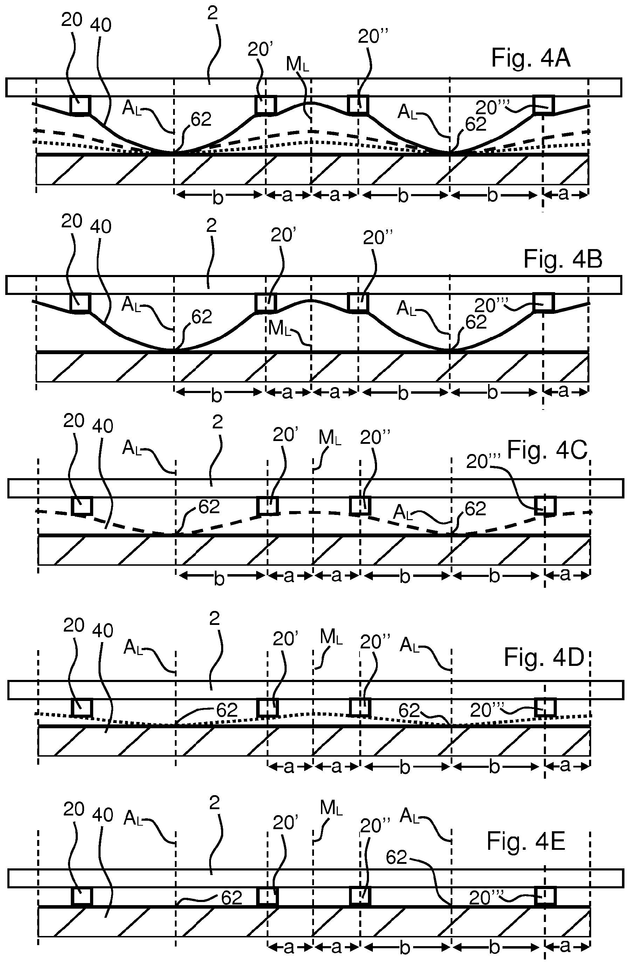

Fig. 4A illustrates a schematic cross-sectional view of a roof with roofing felt 40 and a solar panel attached to mounting rails 20, 20', 20", 20''' attached to the roofing felt 40. Fig. 4A basically corresponds to Fig. 2A, however, only one solar panel 2 is attached to the mounting rails 20, 20', 20", 20'''.

The roofing felt 40 is attached to a structure 58 or a layer provided below the structure 58 at attachment areas 62. Attachment lines A_{L} are indicated to mark these attachment areas 62. The attachment of the roofing felt 40 may be carried out by means of attachment screws as shown in Fig. 1.

The midline M_{L} is indicated between the attachment lines A_{L}. It can be seen that the larges deflection occurs at the midlines M_{L}. The solid line indicates the roofing felt 40 under extreme windy conditions. The stippled line indicates the roofing felt 40 under moderate windy conditions, whereas the dotted line indicates the roofing felt 40 under slightly windy conditions.

The solar panel 2 is attached to the roofing felt 40 in such a manner that a gap is provided between the back side of the solar panel 2 and the roofing felt 40. Furthermore, it can be seen that the gap maintains non-zero values even in the case of wind suction (the solid line).

The second mounting member 20' and the third mounting member 20" are arranged essentially symmetrically with respect to the midline M_{L} between two adjacent attachment lines A_{L}.

The first mounting member 20 and the second mounting member 20' are arranged essentially symmetrically with respect to an attachment line A_{L}.

Fig. 4B illustrates a schematic cross-sectional view of the roof shown in Fig. 4A in a configuration in which the solar panel 2 and thus the roofing felt 40 is being vertically displaced relative to the underlying structure due to wind suction.

Fig. 4C illustrates a schematic cross-sectional view of the roof shown in Fig. 4A in a configuration, in which the solar panel 2 and thus the roofing felt 40 is being moderately vertically displaced relative to the underlying structure.

Fig. 4D illustrates a schematic cross-sectional view of the roof shown in Fig. 4A in a configuration in which the solar panel 2 and thus the roofing felt 40 is being slightly vertically displaced relative to the underlying structure.

Fig. 4E illustrates a schematic cross-sectional view of the roof shown in Fig. 4A in a configuration, in which the solar panel 2 and thus the roofing felt 40 has not been vertically displaced relative to the underlying structure.

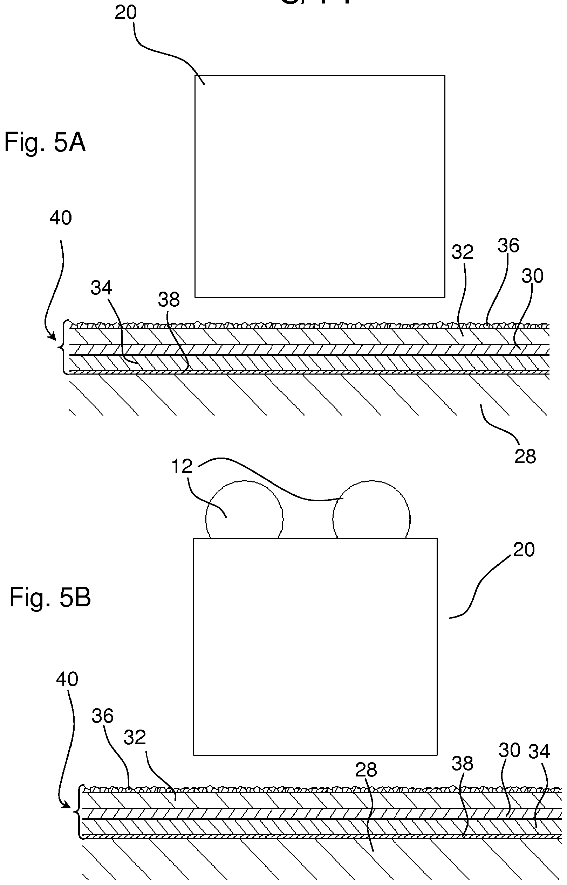

Fig. 5A illustrates a schematic close-up view of a mounting rail 20 provided with glue, and Fig. 5B shows a schematic close-up view of the mounting rail shown in Fig. 5A provided with glue 12.

One can see a schematic cross sectional view of a roofing felt 40 attached to an underlying base surface 28. The base surface 28 may for example be a plywood panel arranged on a roof or a concrete roof. The roofing felt 40 comprises five layers: a central base layer 30 sandwiched between an upper modified bitumen layer 32 and a lower modified bitumen layer 34, a top layer 36 and a bottom layer 38.

The central base layer 30 is a bitumen impregnated fibre containing a layer comprising polyester, fibre glass, rag fibre or other fibres. The base layer 30 is reinforced by the fibres. The upper modified bitumen layer 32 and the lower modified bitumen layer 34 are preferably mixed with a filler component like limestone or sand. Furthermore, it is preferred that polymers such as APP (atactic polypropylene) or SBS (styrene butadiene styrene) are added to the bitumen. APP is a plastic additive that increases the rigidity and the tear resistance, while SBS is a rubber additive that provides elastic benefits.

The top layer 36 which is optional is preferably configured to protect against ultraviolet radiation from the sun. The top layer 36 in Fig. 1 contains small granules that also decrease the fire vulnerability of the roofing felt 40. The bottom layer 38 may be sand containing layer or a foil configured to be attached to a surface by a heating/welding process.

The roofing felt 40 may be attached to a surface (e.g. a roof) by mechanical structures such as nails or brackets or screws or by a heating/welding process.

The mounting rail 20 shown in Fig. 5A has a basically square cross sectional area and it is arranged above the roofing felt 40. In Fig. 5A, no adhesive 12 is added to the mounting rail 20, however, in Fig. 5B adhesive 12 is added to that surface of the mounting rail 20 that is intended to be attached to the roofing felt 40. Two basically equally sized portions of adhesive 12 are added to the mounting rail 20 e.g. by use of a caulking gun (not shown).

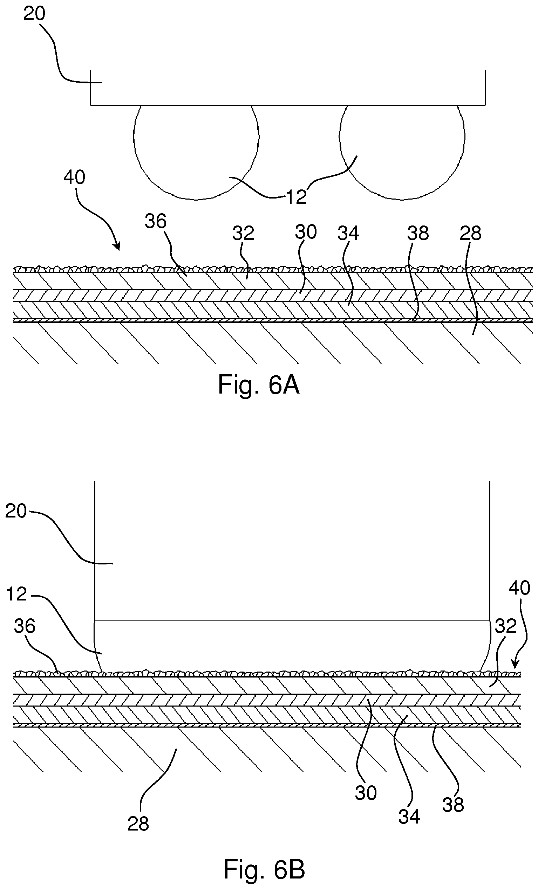

Fig. 6A illustrates how the mounting rail 20 shown in Fig. 5B is being attached to the roofing felt 40. In Fig. 6A, the mounting rail 20 is turned upside down, so that the surface with the adhesive 12 faces the roofing felt 40.

In Fig. 6B, the mounting rail 20 has been attached to the roofing felt 40 by pressing the mounting rail 20 towards the roofing felt 40. It is preferred that the adhesive 12 contains a hardener, so that the adhesive 12 is capable of getting hard within a short time period (e.g. in less than 30 minutes, preferably in less than 20 minutes) during normal working temperature (e.g. above -15°C).

Compared with the prior art attachment methods, the present invention provides a fast and easy alternative, where ventilation of the back side 16 of solar photovoltaic panel 2 is enabled and where no penetration of the roofing felt 40 is required.

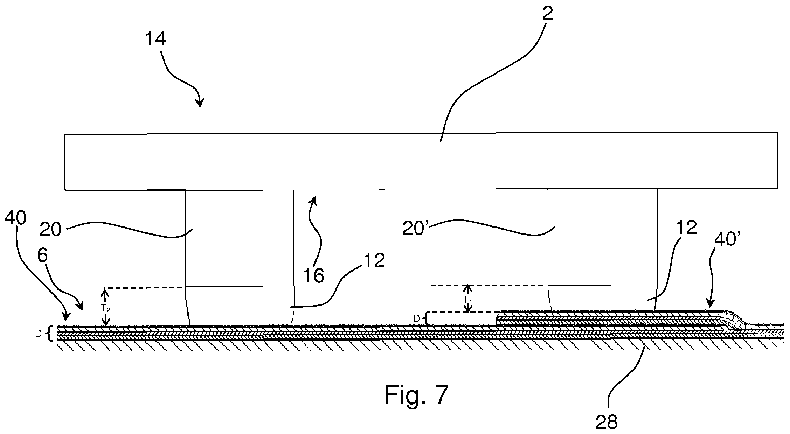

Fig. 7 illustrates a solar photovoltaic panel 2 attached to a surface 6 of a roof 28 that is provided with roofing felt 40. The roofing felt 40 is provided in rolls and it can be seen that the roofing felt layers 40, 40' overlap.

The solar photovoltaic panel 2 has a front side 14 facing upwards and an opposite directed back side 16 facing downwards. The solar photovoltaic panel 2 is mounted on two mounting rails 20, 20' extending basically parallel to each other. The mounting rails 20, 20' are secured to the roofing felt 40, 40' by means of adhesive 12 sandwiched between the distal surface of the mounting rails 20, 20' and the roofing felt 40, 40'. The thickness T₂ of the adhesive 12 that is sandwiched between the distal surface of the first mounting rail 20 and the first roofing felt layer 40 is indicated in Fig. 7. The thickness T₁ of the adhesive 12 that is sandwiched between the distal surface of the second mounting rail 20' and the second roofing felt layer 40' is also indicated in Fig. 7. It can be seen that the thickness T₂ is basically two times larger than the thickness T₁. The layer thickness D of the roofing felt 40' basically corresponds to the thickness T₁. Accordingly, the first mounting rail 20 and the second mounting rail 20' are fixed with the same distance to the base surface 28.

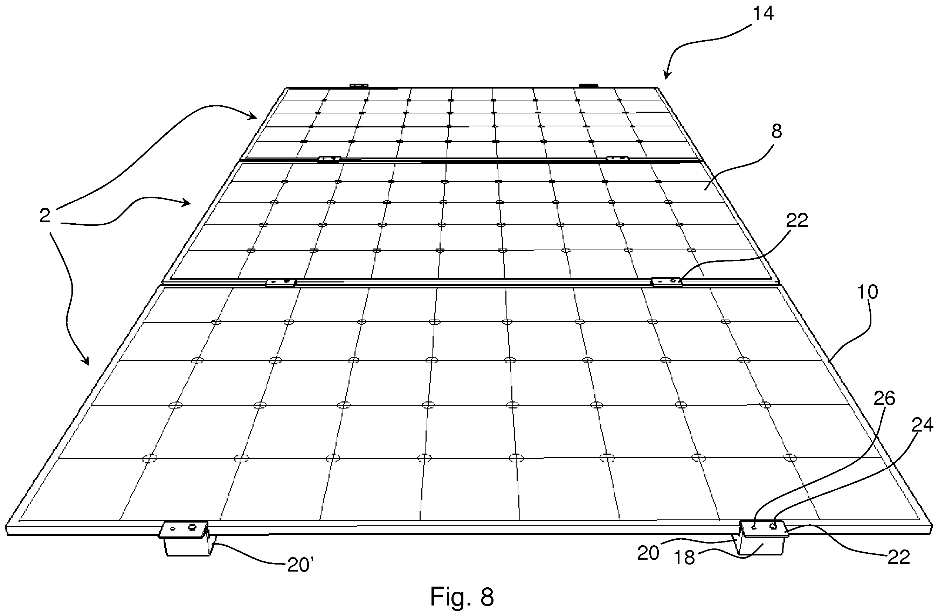

Fig. 8 illustrates a perspective top view of a three solar photovoltaic panels 2 that are attached to a roof (not shown) with roofing felt. Each solar photovoltaic panel 2 comprises a plurality of photovoltaic solar cells covered by a glass layer 8. The glass layer 8 is mounted in and attached to a surrounding frame 10.

The three solar photovoltaic panels 2 are arranged side by side and being interspaced by use of small mounting brackets 22 that are screwed into two mounting rails 20, 20'. Screws 24 are inserted through screw holes 26 and screwed into corresponding threaded bores in protrusions 18 in the mounting rails 20, 20'. The solar photovoltaic panels 2 have a rectangular shape and the short sides are aligned in the configuration shown in Fig. 8.

During installation of the solar photovoltaic panels 2, the first step is to attach the mounting rails 20, 20' to the roofing felt 40. Initially the surface of the roofing felt 40 may be cleaned (e.g. swept or vacuumed) before adhesive 12 is added to the mounting rails 20, 20'. The mounting rails 20, 20' are hereafter placed on the roofing felt 40 in order to secure contact between the adhesive 12 and the roofing felt.

When the adhesive 12 is hardened, the solar photovoltaic panels 2 can be mechanically attached to the mounting rails 20, 20'.

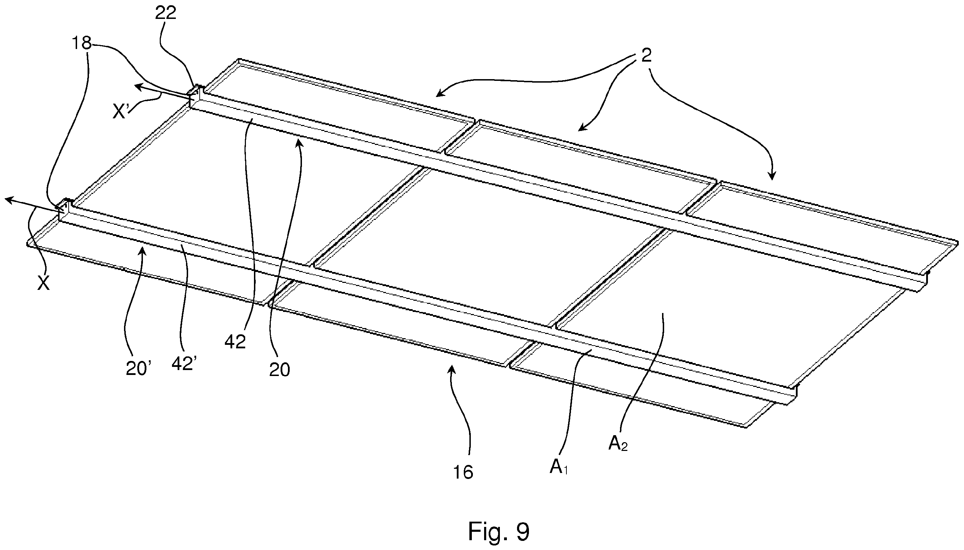

Fig. 9 illustrates a perspective bottom view of the three solar photovoltaic panels 2 shown in Fig. 4. Two mounting rails 20, 20' extend along the back side 16 of the three solar photovoltaic panels 2. Hereby, a space can be provided between the roofing felt 40 and the back side 16 of the three solar photovoltaic panels 2 in such a manner that ventilation of the space is enabled. Ventilation of the space between the roofing felt 40 and the back side 16 of the three solar photovoltaic panels 2 is important to maintain the highest possible efficiency, since photovoltaic cells become less efficient at higher temperatures.

The mounting rails 20, 20' are equipped with protrusions 18 extending basically perpendicular to the longitudinal axes X, X' of the mounting rails 20, 20', respectively.

The mounting rails 20, 20' comprise plane surfaces 42, 42' configured to be glued directly on roofing felt 40. The mounting rails 20, 20' may have a different geometry. By way of example, it is possible to use arched (e.g. circular arced) mounting rails to attach solar photovoltaic panels 2 to a circular arced roof with roofing felt 40.

The surface area A₁ of the rail 20' is indicated. It can be seen that the surface area A₁ of the rail 20' is much smaller that the surface area A₂ of the back side 16 of each of the solar photovoltaic panels 2. In practice, the ratio between A₁ and A₂ (defined as A_{1/}A₂) may be less than 20%, preferably less than 15%. Of course, a certain magnitude of the ratio is required in order to provide a reliable attachment of solar photovoltaic panels 2 to a roofing felt 40. Experiments have shown that a ratio less than 10% provides an attachment that is far stronger than required for standard wind load conditions.

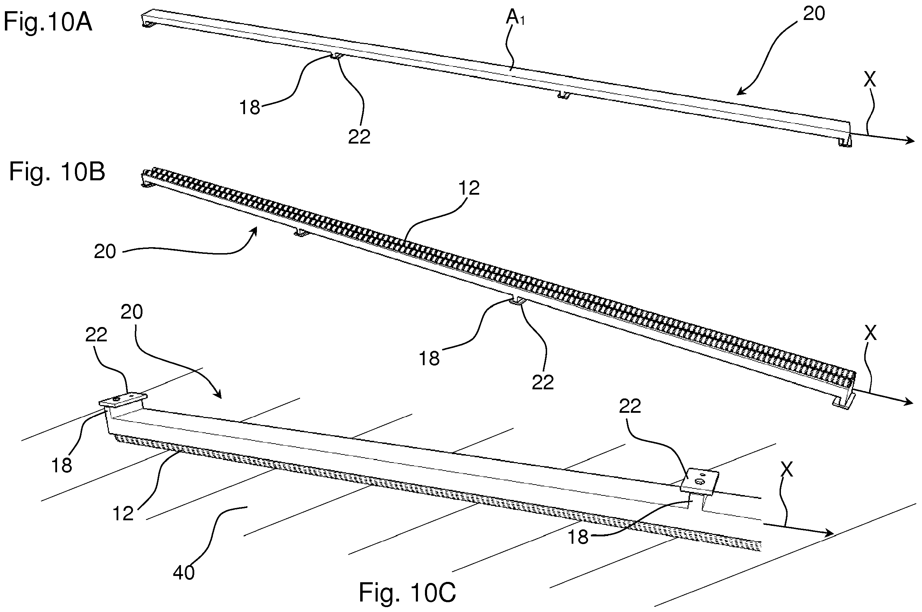

Fig. 10 illustrates three different perspective views of the mounting rail 20 shown in Fig. 8-9. In Fig. 10A, the mounting rail 20 is seen from above. In Fig. 10B, the mounting rail 20 is turned upside down and adhesive 12 is added to its distal surface. In Fig. 10C, the mounting rail 20 has been attached to a roofing felt 40.

The mounting rail 20 has an elongated box-shaped body with a rectangular cross-section. Four protrusions 18 are provided along the length of the mounting rail 20. The protrusions 18 are evenly distributed along the length of the mounting rail 20 with one in each end. The protrusions 18 are formed as thin plates extending perpendicular to the longitudinal axis X of the mounting rail 20.

Furthermore, plate-shaped mounting brackets 22 are provided on top of the protrusions 18. These mounting brackets 22 are configured to be used to fix the frame 10 of solar photovoltaic panels 2 to the mounting rail 20 and hereby provide a firm attachment of the solar photovoltaic panels 2 to the mounting rail 20 (see Fig. 8).

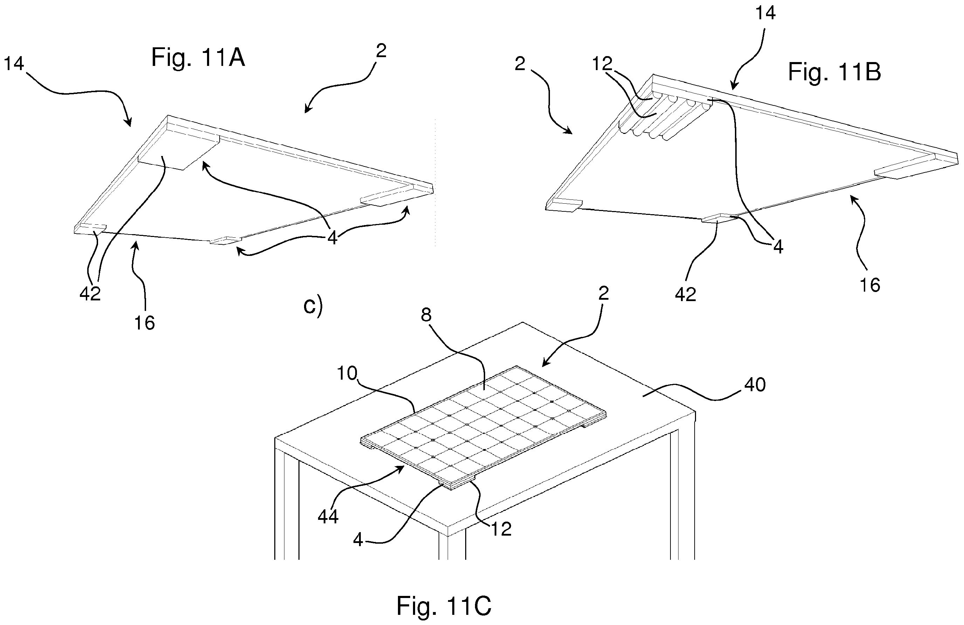

Fig. 11 illustrates perspective views a solar photovoltaic panel 2 with integrated mounting plates 4. Fig. 11A illustrates a perspective bottom view of the solar photovoltaic panel 2. Accordingly, the back side 16 of the solar photovoltaic panel 2 can be seen, while the front side is hidden. Four equally sized mounting plates 4 are attached to the back side 16 of the solar photovoltaic panel 2. One mounting plate is arranged in each corner of the rectangular solar photovoltaic panel 2.

The mounting plates 4 may be glued to the back side 16 of the solar photovoltaic panel 2 or be attached to the solar photovoltaic panel 2 by other suitable means (e.g. by use of mechanical fastening means such as screws). Each of the mounting plates 4 are provided with a plane surface 42 configured to receive adhesive 12 and be attached to roofing felt 40.

Fig. 11B illustrates a perspective bottom view of the solar photovoltaic panel 2 shown in Fig. 11A, however, adhesive 12 has been added to one of the mounting plates 4.

In Fig. 11C, the solar photovoltaic panel 2 has been attached to roofing felt 40 provided on a garage. The solar photovoltaic panel 2 comprises a glass layer 8 provided in a surround metal frame 10. Adhesive 12 has been added to all four mounting plates 4 and the mounting plates 4 have been fixed to the roofing felt 40. The back side 16 of the solar photovoltaic panel 2 can be ventilated, because a space 44 is provided between the back side 16 of the solar photovoltaic panel 2 and the roofing felt 40. Hereby, a higher efficiency of the solar photovoltaic panel 2 can be maintained.

The shape and size of the mounting plates 4 may be changed in order to fulfil specific requirements (e.g. the mechanical strength of the attachment).

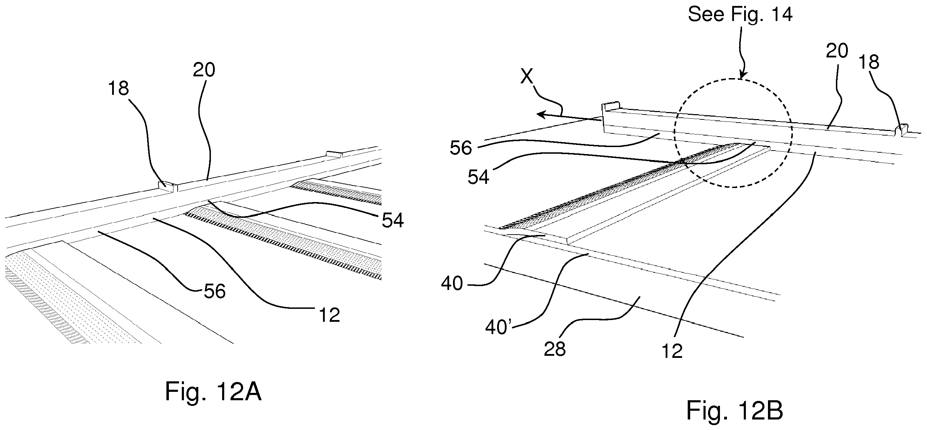

Fig. 12 illustrates two perspective views of a mounting rail 20 glued to roofing felt 40, 40'. Adhesive 12 is used to glue the mounting rail 20 to the roofing felt 40, 40'. The mounting rail 20 is provided with protrusions 18 extending perpendicular to the longitudinal axis X of the mounting rail 20.

A first length of roofing felt 40 is overlapping a second length of roofing felt 40'. Accordingly, the thickness of the adhesive 12 varies along the length of the mounting rail 20. A thin portion 54 of the adhesive 12 is provided at the area at which the distance between the back side of the rail 20 and the first length of roofing 40 is short.

On the other hand, a thick portion 56 of the adhesive 12 is provided at the area at which the distance between back side of the rail 20 and the first length of roofing 40 is large.

The adhesive 12 is capable of filling out the space between the mounting rail 20 and the roofing felt 40, 40' so that a large contact surface between the mounting rail 20 and the roofing felt 40, 40' can be achieved. Accordingly, a strong attachment of the mounting rail 20 to the roofing felt 40, 40' can be achieved.

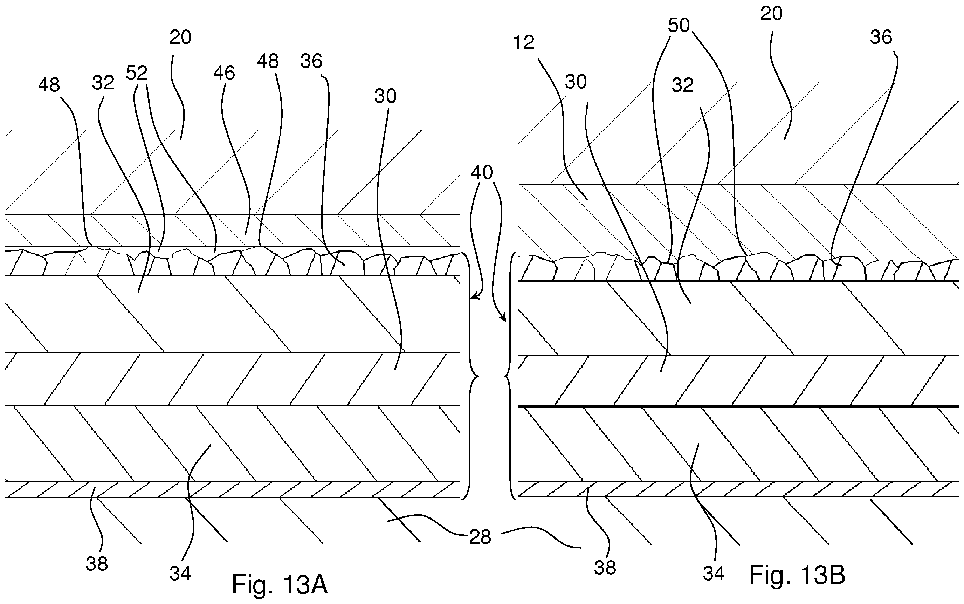

Fig. 13 illustrates close-up views of roofing felt 40 attached to a base surface 28. The roofing felt 40 comprises a top layer 36 with granulated slate. The top layer 36 is attached to an upper modified bitumen layer 32. A base layer 30 is sandwiched between the upper modified bitumen layer 32 and a lower modified bitumen layer 34. A bottom layer 38 is attached to the lower modified bitumen layer 34.

In Fig. 13A, an adhesive tape 46 is attached to the top layer 36, and the free surface of the tape 46 is configured to be attached to a mounting rail 20. The tape 46 is only attached to a limited numbers of contact points 48, because several non-contact areas 52 are provided between the tape 46 and the top layer 36. Accordingly, the tape 46 provides a relative week attachment to the top layer 36.

Furthermore, up to 20 % of the granulated slate is not firmly attached to the upper modified bitumen layer 32. Therefore, up to 20 % of the top layer 36 is not suitable of attachment by use of adhesive tape 46.

Fig. 13B illustrates an example of how the method according to the invention works. Adhesive 12 is added directly to the top layer 36. It can be seen that the adhesive 12 is in contact with granulated slate of the roofing felt 40. There are no non-contact areas 52 as shown in Fig. 9 b), but a lot of contact areas 50. Accordingly, the adhesive 12 provides a very good attachment to the roofing felt 40. The adhesive 12 may to some extent be capable of gluing at least a portion of the 20% "non-fixed" granulated slate together with the remaining 80% granulated slate that is fixed to the underlying lower modified bitumen layer 32.

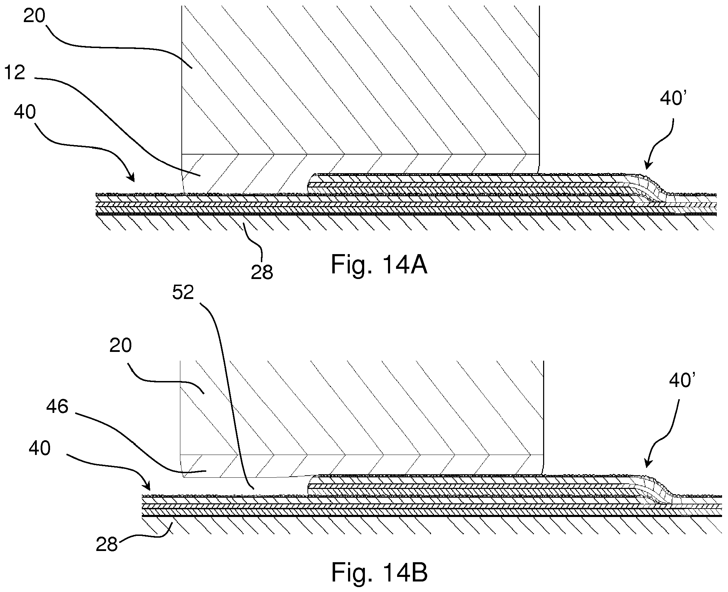

Fig. 14 illustrates two close-up views of a first length roofing felt 40 attached on a base surface 28. The base surface 28 may be a hard material such as a plywood panel or concrete, however, it may also be an insulation material such as mineral wool. In the latter case, the roofing felt 40 is normally attached to a layer under the mineral wool by mechanical means (e.g. long screws).

A second length roofing felt 40' is overlapping and being attached next to the first length roofing felt 40. Accordingly, there is a difference in level between the two length roofing felt 40, 40'.

In Fig. 14A, a mounting rail 20 is glued directly on the roofing felt 40 by using adhesive 12. The adhesive 12 provides good contact with both the mounting rail 20 and the roofing felt 40, 40'. Therefore, this way of attaching a mounting rail 20 to roofing felt 40, 40' is advantageous.

In Fig. 14B, a mounting rail 20 is attached to the roofing felt 40 by using adhesive tape 46. It can be seen that a non-contact area 52 is provided at the area where the tape 46 fills out the space between the mounting rail 20 and the roofing felt 40 due to the difference in level between the two lengths roofing felt 40, 40'. For this reason and due to the other disadvantages associated with using an adhesive tape (explained with reference to Fig. 13A), the tape 46 provides a relative week attachment to the roofing felt 40, 40'.

### List of reference numerals

- 2, 2': Solar photovoltaic panel
- 4: Mounting plate
- 6: Surface
- 8: Glass
- 10: Frame
- 12: Adhesive
- 14: Front side
- 16: Back side
- 18: Protrusion
- 20, 20', 20", 20''': Mounting rail
- 22: Mounting bracket
- 24: Screw
- 26: Hole
- 28: Base surface
- 30: Base layer
- 32: Modified bitumen layer
- 34: Modified bitumen layer
- 36: Top layer
- 38: Bottom layer
- 40, 40', 40", 40''': Roofing felt
- 42, 42': Plane surface
- 44: Space
- 46: Tape
- 48: Contact point
- 50: Contact area
- 52: Non-contact area
- 54: Thin portion
- 56: Thick portion
- 58: Insulation
- 60, 60', 60": Attachment structure
- 62: Attachment area (attachment point)
- D: Thickness
- T₁: Thickness
- T₂: Thickness
- X, X': Longitudinal axis
- A₁, A₂: Area
- G: Gap
- A_{L}: Attachment line
- M_{L}: Midline
- H: Height

## Claims

1. A method for attaching a rigid solar photovoltaic panel (2) having a front side (14) and a back side (16) to roofing felt (40, 40', 40", 40"') attached to an underlying structure (28), wherein the solar photovoltaic panel (2) is attached to two or more mounting members (20, 20', 20", 20''') attached to the roofing felt (40, 40', 40", 40'''), wherein the roofing felt (40, 40', 40", 40''') is attached to the underlying structure (28) in attachment areas (62), indicated by attachment lines (A_{L}), by means of attachment structures (60) in a manner in which portions of the roofing felt (40, 40', 40", 40''') provided between adjacent attachment areas (62) are arranged to be vertically displaced relative to the underlying structure (28), **characterised in that** the method comprises the step of:
- adding adhesive (12) to the mounting members (20, 20', 20", 20''') or to the roofing felt (40, 40', 40", 40''');
- gluing the mounting members (20, 20', 20", 20''') to the roofing felt (40, 40', 40", 40'''), and **in that** the mounting members (20, 20', 20", 20''') are arranged in such a manner that the roofing felt (40, 40', 40", 40''') is restricted from getting into physical contact with the solar photovoltaic panel (2) when the roofing felt (40, 40', 40", 40''') is vertically displaced due to wind suction, and that the solar photovoltaic panel (2) is vertically displaceable relative to the underlying structure (28), as the roofing felt (40, 40', 40", 40''') is being moved with respect to one of the attachment lines (A_{L}), and **in that** a first mounting member (20, 20") of the at least two or more mounting members (20, 20', 20", 20''') and a second mounting member (20', 20''') of the at least two or more mounting members (20, 20', 20", 20''') are arranged between two adjacent attachment structures (60, 60'), and **in that** the first mounting member (20, 20") and the second mounting member (20', 20''') are arranged essentially symmetrically with respect to a midline (M_{L}) between two adjacent attachment lines (A_{L}).

2. A method according to claim 1, **characterised in that** the solar photovoltaic panel (2) is attached to the roofing felt (40) in such a manner that a space/gap (44, G) is provided between the back side (16) of the solar photovoltaic panel (2) and the roofing felt (40), wherein the space/gap (44; G) maintains non-zero values even in the case of wind suction.

3. A method according to claim 1 or 2, **characterised in that** the distance between one of the attachment lines (A_{L}) and the mounting member (20, 20', 20", 20''') adjacent thereto is smaller than the distance between the mounting member (20, 20', 20", 20''') and the adjacent mounting member (20, 20', 20", 20''') which mounting member (20, 20', 20", 20''') and adjacent mounting member (20, 20', 20", 20''') are provided at each their side of the midline (ML).

4. A method according to one of the claims 1 or 2, **characterised in that** the distance between the first mounting member (20, 20") J Z and the second adjacent mounting member (20', 20''') provided at each side of the midline (M_{L}) essentially corresponds to the distance (b) between the mounting member (20, 20', 20", 20''') and the adjacent attachment line (A_{L}).

5. A method according to one of the claims 2-4, **characterised in that** the space/gap (44, G) is larger than a fifth of the height (H) of the mounting members (20, 20', 20", 20''') adjacent to the space/gap (44, G).

6. A method according to one of the claims 2-5, **characterised in that** the space/gap (44, G) is larger than 5% of the distance between the mounting members (20, 20') provided at each side of the midline (M_{L}) and adjacent to the space/gap (44, G).

7. A method according to one of the claims 1-6, **characterised in that** the solar photovoltaic panel (2) comprises four equally sized mounting plates (4) attached to the back side of the solar photovoltaic panel and one of the mounting plates (4) being arranged in each corner of the rectangular solar photovoltaic panel.

8. A method according to claim 7, **characterised in that** the mounting plates (4) are glued to the back side (16) of the solar photovoltaic panel (4) where each mounting plate (4) is provided with a plane surface configured to receive adhesive.

9. A method according to one of the claims 2-8, **characterised in that** the mounting members (20, 20', 20", 20''') are attached to the roofing felt (40, 40', 40", 40''') when the roofing felt (40, 40', 40", 40''') is in an unrolled and stretched configuration.

## Patentansprüche

1. Verfahren zum Befestigen eines steifen Solarphotovoltaikmoduls (2) mit einer Vorderseite (14) und einer Rückseite (16) an Dachpappe (40, 40', 40", 40'''), die an einer tieferliegenden Struktur (28) befestigt ist, wobei das Solarphotovoltaikmodul (2) an zwei oder mehreren Befestigungselementen (20, 20', 20", 20''') befestigt ist, die an der Dachpappe (40, 40', 40", 40''') befestigt sind, wobei die Dachpappe (40, 40', 40", 40''') an der tieferliegenden Struktur (28) in Befestigungsbereichen (62), die durch Befestigungslinien (A_{L}) angegeben werden, mittels Befestigungsstrukturen (60) so befestigt ist, dass Teile der Dachpappe (40, 40', 40", 40'''), die zwischen den angrenzenden Befestigungsbereichen (62) bereitgestellt sind, angeordnet sind, um vertikal relativ zu der tieferliegenden Struktur (28) versetzt zu sein, **dadurch gekennzeichnet, dass** das Verfahren die folgenden Schritte umfasst:
- Hinzufügen von Kleber (12) zu den Befestigungselementen (20, 20', 20", 20''') oder zu der Dachpappe (40, 40', 40", 40''');
- Kleben der Befestigungselemente (20, 20', 20'', 20''') an die Dachpappe (40, 40', 40", 40'''),
und dadurch, dass die Befestigungselemente (20, 20', 20", 20''') so angeordnet sind, dass die Dachpappe (40, 40', 40", 40''') daran gehindert wird, in physischen Kontakt mit dem Solarphotovoltaikmodul (2) zu kommen, wenn die Dachpappe (40, 40', 40", 40''') aufgrund von Windsog vertikal versetzt wird, und dass das Solarphotovoltaikmodul (2) relativ zu der tieferliegenden Struktur (28)vertikal versetzbar ist, wenn die Dachpappe (40, 40', 40", 40''') in Bezug auf eine der Befestigungslinien (A_{L}) bewegt wird, und dass ein erstes Befestigungselement (20, 20'') der mindestens zwei oder mehreren Befestigungselemente (20, 20', 20", 20''') und ein zweites Befestigungselement (20', 20''') der mindestens zwei oder mehreren Befestigungselemente (20, 20', 20", 20''') zwischen zwei angrenzenden Befestigungsstrukturen (60, 60') angeordnet sind, und dass das erste Befestigungselement (20, 20'') und das zweite Befestigungselement (20', 20''') im Wesentlichen symmetrisch angeordnet sind in Bezug auf eine Mittellinie (M_{L}) zwischen zwei angrenzenden Befestigungslinien (A_{L}).

2. Verfahren nach Anspruch 1, **dadurch gekennzeichnet, dass** das Solarphotovoltaikmodul (2) so an der Dachpappe (40) befestigt ist, dass ein Zwischenraum/eine Lücke (44, G) zwischen der Rückseite (16) des Solarphotovoltaikmoduls (2) und der Dachpappe (40) bereitgestellt wird, wobei der Zwischenraum/die Lücke (44; G) sogar bei Windsog Nicht-Null-Werte beibehält.

3. Verfahren nach Anspruch 1 oder 2, **dadurch gekennzeichnet, dass** der Abstand zwischen einer der Befestigungslinien (A_{L}) und dem daran angrenzenden Befestigungselement (20, 20', 20", 20''') kleiner ist als der Abstand zwischen dem Befestigungselement (20, 20', 20", 20''') und dem angrenzenden Befestigungselement (20, 20', 20", 20'''), wobei das Befestigungselement (20, 20', 20", 20''') und das angrenzende Befestigungselement (20, 20', 20", 20''') jeweils auf ihrer Seite der Mittellinie (M_{L}) bereitgestellt sind.

4. Verfahren nach einem der Ansprüche 1 oder 2, **dadurch gekennzeichnet, dass** der Abstand zwischen dem ersten Befestigungselement (20, 20'') und dem zweiten angrenzenden Befestigungselement (20', 20'''), die auf jeder Seite der Mittellinie (M_{L}) bereitgestellt sind, im Wesentlichen dem Abstand (b) zwischen dem Befestigungselement (20, 20', 20", 20''') und der angrenzenden Befestigungslinie (A_{L}) entspricht.

5. Verfahren nach einem der Ansprüche 2 bis 4, **dadurch gekennzeichnet, dass** der Zwischenraum/die Lücke (44, G) größer als ein Fünftel der Höhe (H) der an den Zwischenraum/die Lücke (44, G) angrenzenden Befestigungselemente (20, 20', 20", 20''') ist.

6. Verfahren nach einem der Ansprüche 2 bis 5, **dadurch gekennzeichnet, dass** der Zwischenraum/die Lücke (44, G) größer ist als 5 % des Abstands zwischen den Befestigungselementen (20, 20'), die auf jeder Seite der Mittellinie (M_{L}) bereitgestellt sind und an den Zwischenraum/die Lücke (44, G) angrenzen.

7. Verfahren nach einem der Ansprüche 1 bis 6, **dadurch gekennzeichnet, dass** das Solarphotovoltaikmodul (2) vier gleichgroße Befestigungsplatten (4) umfasst, die an der Rückseite des Solarphotovoltaikmoduls befestigt sind, und dass eine der Befestigungsplatten (4) in jeder Ecke des rechteckigen Solarphotovoltaikmoduls angeordnet ist.

8. Verfahren nach Anspruch 7, **dadurch gekennzeichnet, dass** die Befestigungsplatten (4) an die Rückseite (16) des Solarphotovoltaikmoduls (4) geklebt sind, wobei jede Befestigungsplatte (4) mit einer Planfläche bereitgestellt ist, die konfiguriert ist, um Kleber aufzunehmen.

9. Verfahren nach einem der Ansprüche 2 bis 8, **dadurch gekennzeichnet, dass** die Befestigungselemente (20, 20', 20", 20''') an der Dachpappe (40, 40', 40", 40''') befestigt sind, wenn sich die Dachpappe (40, 40', 40", 40''') in einer nichtgerollten und ausgedehnten Konfiguration befindet.

## Revendications

1. Procédé de fixation d'un panneau solaire photovoltaïque rigide (2) ayant une face avant (14) et une face arrière (16) à un carton goudronné (40, 40', 40", 40''') fixé à une structure sous-jacente (28), dans lequel le panneau solaire photovoltaïque (2) est fixé à au moins deux ou plusieurs éléments de montage (20, 20', 20", 20''') fixés au carton goudronné (40, 40', 40", 40'''), dans lequel le carton goudronné (40, 40', 40", 40''') est fixé à la structure sous-jacente (28) dans des zones de fixation (62), indiquées par des lignes de fixation (A_{L}), au moyen de structures de fixation (60) de manière à ce que des parties du carton goudronné (40, 40', 40", 40''') prévues entre des zones de fixation adjacentes (62) soient disposées pour être déplacées verticalement par rapport à la structure sous-jacente (28), **caractérisé en ce que** le procédé comprend l'étape consistant à:
- ajouter de l'adhésif (12) aux éléments de montage (20, 20', 20", 20''') ou au carton goudronné (40, 40', 40", 40''') ;
- coller les éléments de montage (20, 20', 20", 20''') au carton goudronné (40, 40', 40", 40'''),
et **en ce que** les éléments de montage (20, 20', 20", 20''') sont disposés de telle manière que le carton goudronné (40, 40', 40", 40''') ne puisse pas entrer en contact physique avec le panneau solaire photovoltaïque (2) lorsque le carton goudronné (40, 40', 40", 40''') est déplacé verticalement en raison de l'aspiration du vent, et que le panneau solaire photovoltaïque (2) est déplaçable verticalement par rapport à la structure sous-jacente (28), lorsque le carton goudronné (40, 40', 40", 40''') est déplacé par rapport à l'une des lignes de fixation (A_{L}), et **en ce qu'**un premier élément de montage (20, 20'') des au moins deux ou plusieurs éléments de montage (20, 20', 20", 20''') et un second élément de montage (20', 20''') des au moins deux ou plusieurs éléments de montage (20, 20', 20", 20''') sont disposés entre deux structures de fixation adjacentes (60, 60'), et **en ce que** le premier élément de montage (20, 20'') et le second élément de montage (20', 20''') sont disposés essentiellement symétriquement par rapport à une ligne médiane (M_{L}) entre deux lignes de fixation adjacentes (A_{L}).

2. Procédé selon la revendication 1, **caractérisé en ce que** le panneau solaire photovoltaïque (2) est fixé au carton goudronné (40) de telle manière qu'un espace / écartement (44, G) est prévu entre la face arrière (16) du panneau solaire photovoltaïque (2) et le carton goudronné (40), dans lequel l'espace / écartement (44; G) maintient des valeurs non nulles même en cas d'aspiration du vent.

3. Procédé selon la revendication 1 ou 2, **caractérisé en ce que** la distance entre l'une des lignes de fixation (A_{L}) et l'élément de montage (20, 20', 20", 20''') adjacent à celle-ci est inférieure à la distance entre l'élément de montage (20, 20', 20", 20''') et l'élément de montage adjacent (20, 20', 20", 20'''), lequel élément de montage (20, 20', 20", 20''') et l'élément de montage adjacent (20, 20', 20", 20''') sont prévus de chaque côté de la ligne médiane (M_{L}).

4. Procédé selon l'une des revendications 1 ou 2, **caractérisé en ce que** la distance entre le premier élément de montage (20, 20'') et le second élément de montage adjacent (20', 20''') prévus de chaque côté de la ligne médiane (M_{L}) correspond essentiellement à la distance (b) entre l'élément de montage (20, 20', 20", 20''') et la ligne de fixation adjacente (A_{L}).

5. Procédé selon l'une des revendications 2 à 4, **caractérisé en ce que** l'espace / écartement (44, G) est supérieur à un cinquième de la hauteur (H) des éléments de montage (20, 20', 20", 20''') adjacents à l'espace / écartement (44, G).

6. Procédé selon l'une des revendications 2 à 5, **caractérisé en ce que** l'espace / écartement (44, G) est supérieur à 5% de la distance entre les éléments de montage (20, 20') prévus de chaque côté de la ligne médiane (M_{L}) et adjacents à l'espace / écartement (44, G).

7. Procédé selon l'une des revendications 1 à 6, **caractérisé en ce que** le panneau solaire photovoltaïque (2) comprend quatre plaques de montage de dimensions égales (4) fixées sur la face arrière du panneau solaire photovoltaïque et l'une des plaques de montage (4) étant disposée dans chaque coin du panneau solaire photovoltaïque rectangulaire.

8. Procédé selon la revendication 7, **caractérisé en ce que** les plaques de montage (4) sont collées sur la face arrière (16) du panneau solaire photovoltaïque (4) où chaque plaque de montage (4) est pourvue d'une surface plane configurée pour recevoir de l'adhésif.

9. Procédé selon l'une des revendications 2 à 8, **caractérisé en ce que** les éléments de montage (20, 20', 20", 20''') sont fixés au carton goudronné (40, 40', 40", 40''') lorsque le carton goudronné (40, 40', 40", 40''') est dans une configuration déroulée et étirée.
